# EUROPEAN PATENT SPECIFICATION

(11) **EP 3 719 561 B1**
(45) Date of publication and mention of the grant of the patent: **04.03.2026**
(21) Application number: 19465524.7
(22) Date of filing: 05.04.2019
(51) Int. Cl.: G02B 27/14, G02B 27/01, G02B 27/10

(54) **HEAD-UP DISPLAY WITH HIGH BRIGHTNESS**
HEAD-UP-ANZEIGE MIT HOHER HELLIGKEIT
AFFICHAGE TÊTE HAUTE À HAUTE LUMINOSITÉ

(43) Date of publication of application: 07.10.2020
(73) Proprietor: AUMOVIO Germany GmbH, 60488 Frankfurt am Main (DE)
(72) Inventor: Cara, Norbert-Alexandru, 307289 Urseni (RO); Pasca, Andrei, 300441 Timisoara (RO)
(74) Representative: Aumovio Corporation

(56) References cited:
- US-A1- 2013 128 232
- US-A1- 2015 212 320
- HERMANN DAVID S: "Automotive Displays - Trends, Opportunities and Challenges", 2018 25TH INTERNATIONAL WORKSHOP ON ACTIVE-MATRIX FLATPANEL DISPLAYS AND DEVICES (AM-FPD), FTFMD, 3 July 2018 (2018-07-03), pages 1 - 6, XP033386893, [retrieved on 20180815], DOI: 10.23919/AM-FPD.2018.8437433

## Description

The present invention is related to a head-up display, in particular to a full color head-up display with high brightness. The invention is further related to a vehicle comprising such a head-up display.

A head-up display, also referred to as a HUD, is a display system in which the viewer can maintain his viewing direction, because the contents to be displayed are displayed in his field of vision. While such systems, due to their complexity and costs, were originally mainly used in the aviation sector, they are now also being used in large scale in the automotive sector, as they allow easy reading of critical information without the need to change the eye gaze from the road to an in-cabin instrument cluster.

Head-up displays generally consist of a picture generating unit (PGU), an optical unit and a mirror unit. The picture generating unit generates the image to be displayed. The optical unit directs the image to the mirror unit. The mirror unit is a partially reflecting, translucent pane, which reflects the light in such way that it reaches the so-called eyebox. The eyebox is an area whose height and width correspond to a theoretical viewing window. As long as an eye of the viewer is inside the eyebox, all elements of the virtual image are visible to the eye. If, on the other hand, the eye is outside the eyebox, the virtual image is only partially or not at all visible to the viewer. The larger the eyebox is, the less restricted the viewer is in his choice of sitting position.

The viewer sees the content displayed by the picture generating unit as a virtual image and at the same time the real world behind the translucent pane. In the automotive sector, the windscreen often serves as a mirror unit, the curved shape of which must be taken into account in the representation. However, the mirror unit may also be a dedicated screen, called combiner. Through the interaction of the optical unit and the mirror unit, the virtual image is an enlarged representation of the image generated by the picture generating unit.

The picture generating unit and the optical unit of a head-up display are typically arranged in a common housing assembly, which may also include electronic components necessary for operation of the head-up display. The housing assembly is sealed with a cover glass and protects the various components from damage as well as dust or other environmental influences. Furthermore, the housing assembly helps to simplify mounting of the head-up display in a vehicle, as all necessary components can be installed in a single production step.

US 2015/212320 A1 discloses a head-up display with at least three light sources, each one arranged to emit light with a basic color different from the basic color of the other light sources. The light of the light sources is directed onto a digital micro mirror device including an array of micro mirrors. US 2013/128232 A1 discloses a display apparatus comprising a light source. At least one light modulating device is arranged in a beam path of a light beam emitted by said light source and operable to emit influenced light upon incidence of said light beam.

An important requirement for head-up display applications is the necessary brightness of the virtual image, which needs to be in order of at least 5 000 cd/m², but preferably in the range 10 000 to 15 000 cd/m². Current head-up display solutions typically comprise a picture generating unit that uses a liquid crystal display (LCD) for creating the image to be displayed. In view of all the components that are placed in the optical path of the system, this high brightness requirement translates to a brightness requirement on the top surface of the display panel that is about five to ten times larger, i.e. 50 000 to 100 000 cd/m². Given the typical transmittance of an LCD panel of around 5 to 6%, this translates to a backlight requirement in the order of 1 000 000 to 2 000 000 cd/m². The high brightness requirements for the display lead to a series of problems when an LCD is used in a head-up display, which are mainly due to the low transmittance.

A first issue is the high thermal impact due to the heat generated by the backlight unit and the luminous power dissipated by the absorption in the display panel of around 95% of the incoming light. Critical aspects in this regard are the clearing temperature of the liquid crystal and the temperature performance of the polarizers attached to the liquid crystal panel. If the temperature of the liquid crystal exceeds the clearing temperature, the liquid crystal may lose its light polarizing properties and the display becomes transparent.

A second issue is the high power consumption required for achieving the high brightness of the backlight, which usually is in the order of 10 W or more for problematic applications, independent of the actual display content.

In order to solve the two problems mentioned above, a complex thermal management is required, which limits the flexibility of the technical design of the head-up display.

It is an object of the present invention to provide an improved solution for a head-up display with high brightness.

This object is achieved by a head-up display according to claim 1. The dependent claims include advantageous further developments and improvements of the present principles as described below.

According to one aspect of the invention, a head-up display according to claim 1 allows for compensating for relative misalignments of generated images.

According to the invention, the generated images are monochromatic or multicolored images. In the case of monochromatic images, the reproduced colors cover very narrow bands centered around the primary colors, that is typically around red, green or blue. In the case of multicolored images, the reproduced colors cover a wider color band or several narrow bands centered around typically two primary colors like red and green or green and blue.

According to the invention, for generating a full color image two or more monochromatic or multicolored images are generated by dedicated displays. The monochromatic or multicolored images are then combined at the position of the eyebox, resulting in the desired image. The use of dedicated displays for generating the different monochromatic or multicolored images has the advantage that the brightness requirement for each individual display is reduced, as all displays contribute to the overall brightness. In addition, this approach allows making use of new high brightness display technologies, which at present are designed for a single color channel. In the future, these display technologies may also allow for the combination of two colors on the same substrate. As a result of the described solution, the system complexity is reduced, as fewer measures for thermal management are needed. Furthermore, the reduced power consumption offers more flexibility for designing the head-up display.

In one advantageous embodiment, the displays are MicroLED-displays. In order to generate high light outputs, it has been proposed to employ a very dense matrix of individual inorganic micro LEDs (LED: Light Emitting Diode) to form a display array. Though full color MicroLED-displays are available, very high brightness levels are best achieved when all micro LEDs of the matrix emit the same color. For MicroLED-displays also the designations MLED, mLED, and µLED are used. The technology has demonstrated brightness levels in the order of 2 000 000 cd/m² and power levels around 30 W per color channel when all pixels were in an 'ON'-condition. The monochromatic MicroLED-display panels provide high pixel densities but have relatively small sizes. This make them very attractive for automotive head-up displays. For generating a multi-color image, at least two such MicroLED-displays are used. For generating a full-color image, either three such MicroLED-displays are used. Alternatively, at least one MicroLED-display needs to be capable of providing two colors.

Using self-emissive MicroLED-displays relaxes the thermal impact, as inorganic components, i.e. the LEDs, are capable of operating at higher temperatures than organic based components like the liquid crystal or the polarizer. Furthermore, the power consumption is reduced to about a tenth of the power consumption of the standard LCD application. If the image to be displayed is a full white image, the required brightness on the surface of the MicroLED-display is in the order of 200 000 cd/m², due to the larger magnification that is required because of the smaller display size. Given the maximum achievable brightness of 2 000 000 cd/m² at full current, the operating current of the MicroLED-display is around five times smaller than the operating current for full brightness, resulting in a power dissipation of around 6 W per color channel. However, as most of the time for head-up display applications only 5 to 10% of the display pixels are turned on at significant brightness levels, the resulting power requirement of the proposed head-up display with MicroLED-displays is in the range of 1 to 2 W, all color channels combined.

According to one aspect of the invention, the optical means may comprise a mirror, wherein the two or more displays have different orientations relative to this mirror. Each display is placed at a specific angle relative to the others. The angles between the display planes are chosen such that the generated images are properly aligned for multi-color rendition in the eyebox. This approach for combining the generated images requires a proper relative alignment of the displays. Once the displays are aligned, they can be aligned as a single unit relative to the mirror, which simplifies production of the picture generating unit.

In one advantageous embodiment, relative misalignments of the generated images are compensated for by shifting the generated images on the respective displays. Despite an initial relative alignment of the display's small misalignments of the different color components may still occur. Such misalignments may be compensated electronically by small shifts in the individual generated images on the specific displays. This has the advantage that it is not necessary to provide a possibility for a mechanical alignment of the displays.

In one advantageous embodiment, the head-up display further comprises an actuator for the mirror for adjusting a position of the virtual image. By adjusting the orientation of the at least one mirror, it is possible to modify the position of the virtual image. This allows coping with different user positions with regard to the eyebox or different user preferences. Preferably, the actuator is motorized and can be controlled by a control unit.

According to the invention, the optical means comprises a mirror arrangement comprising a dedicated mirror or a dedicated mirror area for each display. Each display faces a dedicated mirror. Each mirror is placed at specific angle relative to the others. The angles between the mirror planes are chosen such that the generated images are properly aligned for multi-color rendition in the eyebox. This approach for combining the generated images does not require a particularly exact alignment of the displays, as the mirrors may be used to finely align the generated images such that they are properly combined in the eyebox. The mirror arrangement comprises actuators for the mirrors for compensating for relative misalignments of the generated images. Using actuators for the mirrors simplifies the alignment of the generated images, as with appropriate actuators the positions of the mirrors can be very precisely adjusted. Preferably, the actuators are motorized and can be controlled by a control unit.

In one advantageous embodiment, the actuators are further configured to adjust a position of the virtual image. By adjusting the orientations of the mirrors, it is likewise possible to modify the position of the virtual image. This allows coping with different user positions regarding the eyebox or different user preferences.

In one advantageous embodiment, the head-up display comprises three displays for generating red, green, and blue monochromatic images. Using three displays, each generating a primary color, allows generating full color images. Of course, it is likewise possible to use more than three displays or other color combinations that are suitable for generating full color images. When three MicroLED-displays are used, this will result in a power dissipation of around 18 W for a full white image.

In one advantageous embodiment, at least one of the two or more displays is configured to generate multicolored images. This solution has the advantage that only two displays are needed generating full color images.

In one advantageous embodiment, the head-up display further comprises a heat sink for the displays. Though the solution according to the present invention results in a reduced power consumption, provision of a heat sink will further improve thermal management.

According to one aspect of the invention, a vehicle comprises a head-up display according to the invention for generating an image for a user of the vehicle. The vehicle may, for example, be a car or an aircraft. Of course, the inventive solution can also be used in other environments or for other applications, e.g. in trucks, busses, in railway and public transport, cranes and construction machinery, etc.

The invention is defined by the appended claims.

### Figures

- Fig. 1: shows a sketch of a state-of-the-art head-up display for a motor vehicle;
- Fig. 2: shows a sketch of a head-up display according to the invention;
- Fig. 3: schematically depicts an example of an arrangement of individual displays for generating monochromatic images and an optical means for combining the monochromatic images; and
- Fig. 4: schematically depicts an embodiment of an arrangement of individual displays for generating monochromatic images and an optical means for combining the monochromatic images.

### Detailed description

For a better understanding of the principles of the present invention, embodiments of the invention will be explained in more detail below with reference to the figures. Like reference numerals are used in the figures for the same or equivalent elements and are not necessarily described again for each figure. It is to be understood that the invention is not limited to the illustrated embodiments and that the features described may also be combined or modified without departing from the scope of the invention as defined in the appended claims.

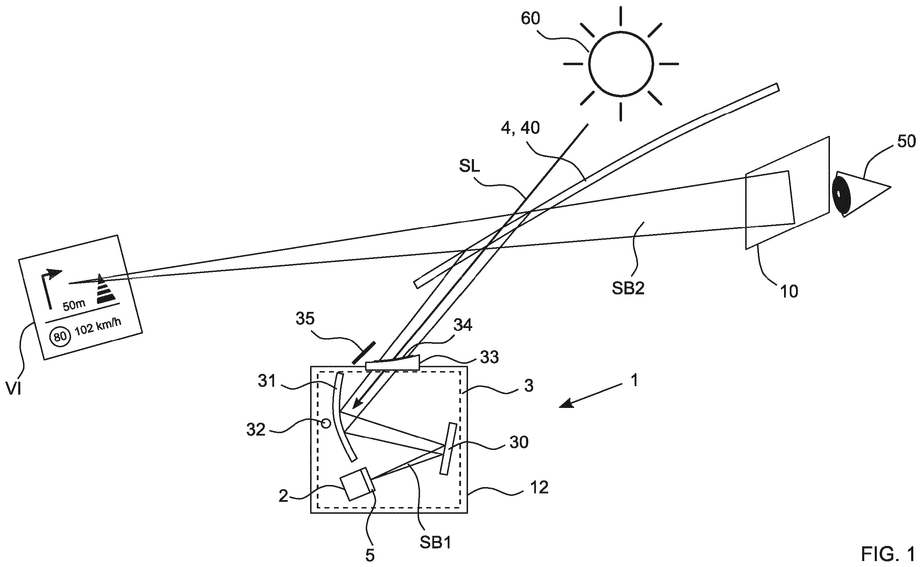

Fig. 1 shows a sketch of a state-of-the-art head-up display 1 for a motor vehicle. The head-up display 1 has a picture generating unit 2, an optical unit 3 and a mirror unit 4. A beam SB1 emanates from a liquid crystal display 5 of the picture generating unit 2 and is reflected by a folding mirror 30 onto a curved mirror 31, which reflects it in the direction of the mirror unit 4. The mirror unit 4 is shown here as a windscreen 40 of the motor vehicle. From there, the SB2 beam is directed towards the eye 50 of an observer.

The observer sees a virtual image VI, which is located outside the vehicle above the bonnet or even in front of the vehicle. Due to the interaction of the optical unit 3 and the mirror unit 4, the virtual image VI is an enlarged representation of the image displayed by the display 5. Here a symbolic speed limit, the current vehicle speed and navigation instructions are displayed. As long as the eye 50 is inside the eyebox 10 indicated by a rectangle, all elements of the virtual image VI are visible to the eye 50. If the eye 50 is located outside the eyebox 10, the virtual image VI is only partially or not at all visible to the viewer. The larger the eyebox 10 is, the less restricted the viewer is in his choice of the seating position.

The curvature of the curved mirror 31 is adapted to the curvature of the windscreen 40 and ensures that the image distortion is stable over the entire eyebox 10. The curved mirror 31 is rotatably supported by a bearing 32. By rotating the curved mirror 31, it is possible to shift the eyebox 10 and thus to adjust the position of the eyebox 10 to the position of the eye 50. The folding mirror 30 ensures that the distance travelled by the beam SB1 between the display 5 and the curved mirror 31 is long, while at the same time the optical unit 3 remains compact. The optical unit 3 and the picture generating unit 2 are accommodated in a housing assembly 12 and separated from the environment by a transparent cover 33. The optical elements of the optical unit 3 are thus protected, for example, against dust inside the vehicle. An optical foil or polarizer 34 can be located on the cover 33. The display 5 is typically polarized and the mirror unit 4 acts like an analyzer. The purpose of the polarizer, or glare trap, 34 is to influence the amount of sunlight entering the head-up display. A light trap 35 serves to securely shield light reflected from the road or to block light from different sources placed at car height level so that it does not reach the observer. In addition to sunlight SL, also light from another source of interference 60 might reach the display 5.

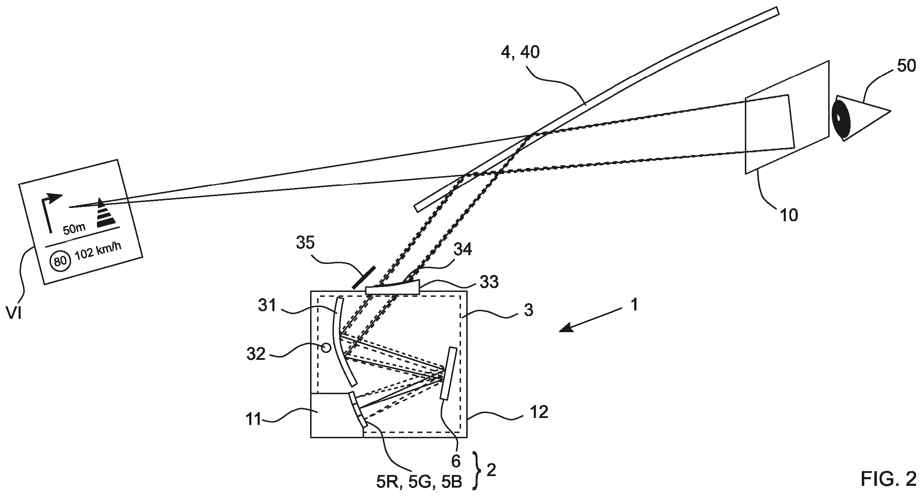

Fig. 2 shows a sketch of a head-up display 1 according to the invention. The head-up display 1 is similar to the head-up display 1 of Fig. 1, but the liquid crystal display is replaced by introducing two or more displays 5R, 5G, 5B as a light generator, each display 5R, 5G, 5B generating a monochromatic or multicolored image. Preferably, three displays 5R, 5G, 5B are used, each display handling 1 primary color, which allows generating full color images. Alternatively, at least one of the displays 5R, 5G, 5B is configured to generate multicolored images. In this case, for generating full color images only two displays are needed. Advantageously, the displays 5R, 5G, 5B are MicroLED-displays, which for generating monochrome images can be manufactured as very small, but high-density displays. In the future, such MicroLED-displays may also be able to combine two colors on the same substrate. In Fig. 2, the displays 5R, 5G, 5B are arranged one above the other on a heat sink 11. Of course, they can likewise be arranged side by side. The monochromatic or multicolored images stemming from the displays 5R, 5G, 5B are combined at a position of the eyebox by an optical means 6. In Fig. 2, the optical means 6 replaces the folding mirror of Fig. 1.

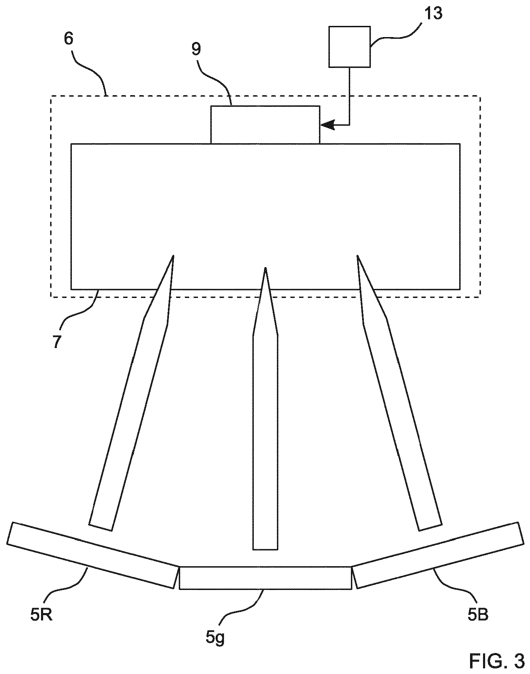

Fig. 3 schematically depicts an example of an arrangement of individual displays 5R, 5G, 5B for generating monochromatic images and an optical means 6 for combining the monochromatic images. In this example, the optical means 6 comprises a common mirror 7, which is faced by the three displays 5R, 5G, 5B. Each display 5R, 5G, 5B is placed at a specific angle relative to the others. The angles between the display planes are chosen such that the monochromatic images are properly aligned for multi-color rendition in the eyebox. This approach for combining the monochromatic images requires a proper relative alignment of the displays 5R, 5G, 5B. Once the displays 5R, 5G, 5B are aligned, they can be aligned as a single unit relative to the mirror 7. Relative misalignments of the monochromatic images are electronically compensated for by shifting the monochromatic images on the respective displays 5R, 5G, 5B. An actuator 9 is provided for the mirror 7 for adjusting a position of the virtual image. By adjusting the orientation of the mirror 7, it is possible to modify the position of the virtual image. This allows coping with different user positions with regard to the eyebox or different user preferences. Preferably, the actuator 9 is motorized and can be controlled by a control unit 13.

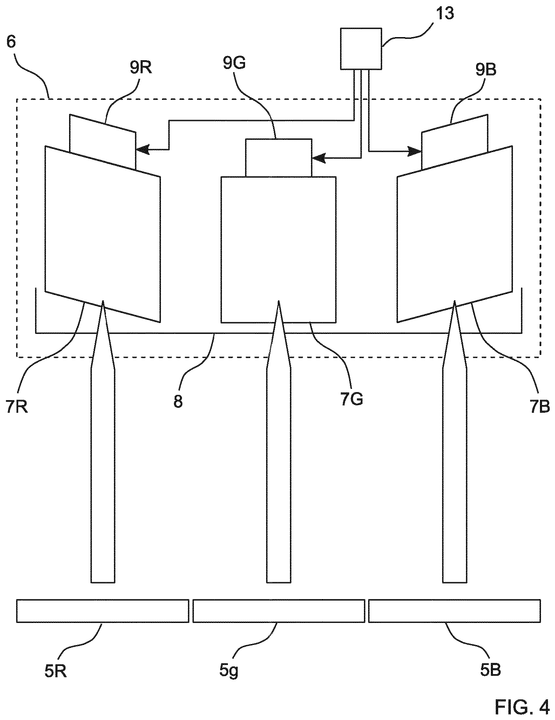

Fig. 4 schematically depicts an embodiment, according to the invention, of an arrangement of individual displays 5R, 5G, 5B for generating monochromatic images and an optical means 6 for combining the monochromatic images. In this embodiment, the optical means 6 comprises a mirror arrangement 8 comprising three dedicated mirrors 7R, 7G, 7B for the displays 5R, 5G, 5B. Each mirror 7R, 7G, 7B is faced by one of the three displays 5R, 5G, 5B. The mirrors 7R, 7G, 7B may also be formed as dedicated areas of a single flexible mirror that may be deformed in dedicated sections. Each mirror 7R, 7G, 7B is placed at specific angle relative to the others. The angles between the mirror planes are chosen such that the monochromatic images are properly aligned for multi-color rendition in the eyebox. This approach for combining the monochromatic images does not require a particularly exact alignment of the displays 5R, 5G, 5B, as the mirrors 7R, 7G, 7B may be used to finely align the monochromatic images such that they are properly combined in the eyebox. Actuators 9R, 9G, 9B are provided for the mirrors 7R, 7G, 7B for adjusting a position of the virtual image. By adjusting the orientation of the mirrors 7R, 7G, 7B, it is possible to modify the position of the virtual image. This allows coping with different user positions with regard to the eyebox or different user preferences. Preferably, the actuators 9R, 9G, 9B are motorized and can be controlled by a control unit 13. The solution depicted in Fig. 4 can also be combined with the approach shown in Fig. 3. In this case, the displays 5R, 5G, 5B are pre-aligned mechanically, i.e. each display 5R, 5G, 5B is placed at a specific angle relative to the others. At the same time, adjustments may be made through the use of dedicated mirrors 7R, 7G, 7B.

## Claims

1. A head-up display (1), the head-up display (1) comprising:
- a picture generating unit (2) for creating an image to be displayed as a virtual image (VI) to a viewer, the picture generating unit (2) comprising two or more displays (5R, 5G, 5B) for generating images covering a limited part of the full color spectrum and an optical means (6) for combining the generated images at a position of the eyebox (10); and
- an optical unit (3) for projecting the image to be displayed towards an eyebox (10);
**characterized in that** the optical means (6) comprises a mirror arrangement (8) comprising a dedicated mirror (7R, 7G, 7B) for each display (5R, 5G, 5B) and at least one actuator (9R, 9G, 9B) for each mirror (7R, 7G, 7B) of said mirror arrangement (8) or a mirror arrangement (8) comprising a dedicated mirror area for each display (5R, 5G, 5B) and at least one actuator (9R, 9G, 9B) for each mirror area of said mirror arrangement (8) for compensating for relative misalignments of the generated images.

2. The head-up display (1) according to claim 1, wherein at least one of the generated images is a multicolored image.

3. The head-up display (1) according to claim 1 or 2, wherein the displays (5R, 5G, 5B) are MicroLED-displays.

4. The head-up display (1) according to one of the preceding claims, wherein relative misalignments of the generated images are compensated for by shifting the generated images on the respective displays (5R, 5G, 5B).

5. The head-up display (1) according to one of the preceding claims, further comprising at least one mirror (7), and
an actuator (9) for the at least one mirror (7) for adjusting a position of the virtual image (VI),
wherein the two or more displays (5R, 5G, 5B) have different orientations relative to the at least one mirror (7).

6. The head-up display (1) according to one of the preceding claims, wherein the actuators (9R, 9G, 9B) of the mirror arrangement (8) are further configured to adjust a position of the virtual image (VI).

7. The head-up display (1) according to any of claims 1 to 6, comprising three displays (5R, 5G, 5B) for generating red, green, and blue monochromatic images.

8. The head-up display (1) according to any of claims 1 to 6, wherein at least one of the two or more displays (5R, 5G, 5B) is configured to generate multicolored images.

9. The head-up display (1) according to any of the preceding claims, further comprising a heat sink (11) for the displays (5R, 5G, 5B).

10. A vehicle with a head-up display (1) according to any of claims1 to 9 for generating an image for a user of the vehicle.

## Patentansprüche

1. Head-up-Anzeige (1), wobei die Head-up-Anzeige (1) Folgendes umfasst:
- eine Bilderzeugungseinheit (2) zum Erstellen eines Bildes, das einem Betrachter als ein virtuelles Bild (VI) anzuzeigen ist, wobei die Bilderzeugungseinheit (2) zwei oder mehr Anzeigen (5R, 5G, 5B) zum Erzeugen von Bildern, die einen begrenzten Teil des vollständigen Farbspektrums abdecken, und ein optisches Mittel (6) zum Kombinieren der erzeugten Bilder an einer Position der Eyebox (10) umfasst; und
- eine optische Einheit (3) zum Projizieren des anzuzeigenden Bildes in Richtung einer Eyebox (10);
**dadurch gekennzeichnet, dass** das optische Mittel (6) eine Spiegelanordnung (8), umfassend einen dedizierten Spiegel (7R, 7G, 7B) für jede Anzeige (5R, 5G, 5B) und mindestens einen Aktuator (9R, 9G, 9B) für jeden Spiegel (7R, 7G, 7B) der besagten Spiegelanordnung (8), oder eine Spiegelanordnung (8), umfassend einen dedizierten Spiegelbereich für jede Anzeige (5R, 5G, 5B) und mindestens einen Aktuator (9R, 9G, 9B) für jeden Spiegelbereich der besagten Spiegelanordnung (8), zum Ausgleichen relativer Fehlausrichtungen der erzeugten Bilder umfasst.

2. Head-up-Anzeige (1) nach Anspruch 1, wobei mindestens eines der erzeugten Bilder ein mehrfarbiges Bild ist.

3. Head-up-Anzeige (1) nach Anspruch 1 oder 2, wobei die Anzeigen (5R, 5G, 5B) MicroLED-Anzeigen sind.

4. Head-up-Anzeige (1) nach einem der vorhergehenden Ansprüche, wobei relative Fehlausrichtungen der erzeugten Bilder durch Verschieben der erzeugten Bilder auf den jeweiligen Anzeigen (5R, 5G, 5B) ausgeglichen werden.

5. Head-up-Anzeige (1) nach einem der vorhergehenden Ansprüche, ferner umfassend mindestens einen Spiegel (7) und einen Aktuator (9) für den mindestens einen Spiegel (7) zum Einstellen einer Position des virtuellen Bildes (VI), wobei die zwei oder mehr Anzeigen (5R, 5G, 5B) unterschiedliche Ausrichtungen relativ zu dem mindestens einen Spiegel (7) aufweisen.

6. Head-up-Anzeige (1) nach einem der vorhergehenden Ansprüche, wobei die Aktuatoren (9R, 9G, 9B) der Spiegelanordnung (8) ferner konfiguriert sind, eine Position des virtuellen Bildes (VI) einzustellen.

7. Head-up-Anzeige (1) nach einem der Ansprüche 1 bis 6, umfassend drei Anzeigen (5R, 5G, 5B) zum Erzeugen roter, grüner und blauer monochromer Bilder.

8. Head-up-Anzeige (1) nach einem der Ansprüche 1 bis 6, wobei mindestens eine der zwei oder mehr Anzeigen (5R, 5G, 5B) konfiguriert ist, mehrfarbige Bilder zu erzeugen.

9. Head-up-Anzeige (1) nach einem der vorhergehenden Ansprüche, ferner umfassend einen Kühlkörper (11) für die Anzeigen (5R, 5G, 5B).

10. Fahrzeug mit einer Head-up-Anzeige (1) nach einem der Ansprüche 1 bis 9 zum Erzeugen eines Bildes für einen Benutzer des Fahrzeugs.

## Revendications

1. Affichage tête haute (1), l'affichage tête haute (1) comprenant :
- une unité de génération d'images (2) permettant de créer une image à afficher comme image virtuelle (VI) à un spectateur, l'unité de génération d'images (2) comprenant deux affichages (5R, 5G, 5B) ou plus permettant de générer des images couvrant une partie limitée du spectre complet des couleurs et un moyen optique (6) permettant de combiner les images générées à un emplacement de la zone de vision (10) ; et
- une unité optique (3) permettant de projeter l'image à afficher vers une zone de vision (10) ;
**caractérisé en ce que** le moyen optique (6) comprend un agencement de miroirs (8) comprenant un miroir dédié (7R, 7G, 7B) pour chaque affichage (5R, 5G, 5B) et au moins un actionneur (9R, 9G, 9B) pour chaque miroir (7R, 7G, 7B) dudit agencement de miroirs (8) ou un agencement de miroirs (8) comprenant une zone de miroir dédiée pour chaque affichage (5R, 5G, 5B) et au moins un actionneur (9R, 9G, 9B) pour chaque zone de miroir dudit agencement de miroirs (8) permettant de compenser des désalignements relatifs des images générées.

2. Affichage tête haute (1) selon la revendication 1, dans lequel au moins l'une des images générées est une image multicolore.

3. Affichage tête haute (1) selon la revendication 1 ou 2, dans lequel les affichages (5R, 5G, 5B) sont des affichages MicroLED.

4. Affichage tête haute (1) selon l'une des revendications précédentes, dans lequel les désalignements relatifs des images générées sont compensés par le décalage des images générées sur les affichages respectifs (5R, 5G, 5B).

5. Affichage tête haute (1) selon l'une des revendications précédentes, comprenant également au moins un miroir (7) et un actionneur (9) pour l'au moins un miroir (7) permettant de régler un emplacement de l'image virtuelle (VI), dans lequel les deux affichages (5R, 5G, 5B) ou plus présentent des orientations différentes par rapport à l'au moins un miroir (7).

6. Affichage tête haute (1) selon l'une des revendications précédentes, dans lequel les actionneurs (9R, 9G, 9B) de l'agencement de miroirs (8) sont également configurés pour régler un emplacement de l'image virtuelle (VI).

7. Affichage tête haute (1) selon l'une quelconque des revendications 1 à 6, comprenant trois affichages (5R, 5G, 5B) permettant de générer des images monochromes rouges, vertes et bleues.

8. Affichage tête haute (1) selon l'une quelconque des revendications 1 à 6, dans lequel au moins l'un des deux affichages (5R, 5G, 5B) ou plus est configuré pour générer des images multicolores.

9. Affichage tête haute (1) selon l'une quelconque des revendications précédentes, comprenant également un dissipateur thermique (11) pour les affichages (5R, 5G, 5B).

10. Véhicule doté d'un affichage tête haute (1) selon l'une quelconque des revendications 1 à 9 permettant de générer une image pour un utilisateur du véhicule.
